(19) **Europäisches Patentamt / European Patent Office / Office européen des brevets**

(11) **EP 4 711 644 A1**

(12) **EUROPEAN PATENT APPLICATION**
published in accordance with Art. 153(4) EPC

(43) Date of publication:
**18.03.2026 Bulletin 2026/12**

(21) Application number: **24813737.4**

(22) Date of filing: **05.02.2024**

(51) International Patent Classification (IPC):
**F16H 61/04** (2006.01)　　**F16H 61/02** (2006.01)
**F16H 61/12** (2010.01)

(86) International application number:
**PCT/CN2024/075880**

(87) International publication number:
**WO 2024/244531 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.06.2023　CN 202310653686**

(71) Applicant: **Yutong Bus Co., Ltd.**
**Zhengzhou, Henan 450061 (CN)**

(72) Inventors:
• **ZHAO, Di**
**Zhengzhou, Henan 450061 (CN)**

• **LIU, Zongjian**
**Zhengzhou, Henan 450061 (CN)**
• **ZHANG, Xiangyan**
**Zhengzhou, Henan 450061 (CN)**
• **MENG, Xiaopei**
**Zhengzhou, Henan 450061 (CN)**
• **LIU, Xiaowei**
**Zhengzhou, Henan 450061 (CN)**
• **LI, Bingbing**
**Zhengzhou, Henan 450061 (CN)**

(74) Representative: **Gulde & Partner**
**Patent- und Rechtsanwaltskanzlei mbB**
**Berliner Freiheit 2**
**10785 Berlin (DE)**

(54) **PURE ELECTRIC MULTI-GEAR AMT GEAR-SHIFTING CONTROL METHOD, DRIVETRAIN, AND ELECTRIC VEHICLE**

(57) A pure electric multi-gear AMT gear-shifting control method, a drivetrain, and an electric vehicle are provided. The control method includes: performing torque reduction on a drive motor to interrupt vehicle power when a vehicle needs to shift a gear; controlling the drive motor to output a first target torque after the vehicle power is interrupted, where a numerical value of the first target torque is equal to a product of a rotational inertia of a motor rotor and an angular acceleration of the drive motor; and performing a gear disengagement operation and then performing gear engagement after the drive motor outputs the first target torque. According to the control method, the drive motor is controlled to output the first target torque of the same magnitude as an inertial torque of a drive end, to overcome the inertial torque, thereby ensuring that an interior of an AMT does not bear drag torque, which improves a success rate and smoothness of gear disengagement of the vehicle.

```
┌─────────────────────────────────────┐
│ Control a drive motor to perform     │
│ torque reduction until torque reaches 0 │
└─────────────────────────────────────┘
                  │
                  ▼
┌─────────────────────────────────────┐
│ Control a transmission to perform gear │
│ disengagement                         │
└─────────────────────────────────────┘
                  │
                  ▼
┌─────────────────────────────────────┐
│ Control the drive motor to perform speed │
│ regulation                            │
└─────────────────────────────────────┘
                  │
                  ▼
┌─────────────────────────────────────┐
│ Control the transmission to perform   │
│ gear engagement                       │
└─────────────────────────────────────┘
                  │
                  ▼
┌─────────────────────────────────────┐
│ Control the drive motor to perform torque │
│ restoration                           │
└─────────────────────────────────────┘
```

FIG. 1

## Description

### TECHNICAL FIELD

The present invention relates to the field of electric vehicle transmission technologies, and in particular, to a pure electric multi-gear AMT gear-shifting control method, a drivetrain, and an electric vehicle.

### BACKGROUND

To adapt to the market trend of energy conservation and emission reduction, commercial vehicles adopt pure electric power systems. Passenger buses and light commercial vehicles mostly adopt the design of motor + reduction gearbox. Heavy commercial vehicles such as trucks have complex operating conditions and mostly adopt the design of motor + AMT. To save system costs, a pure electric AMT system generally eliminates a clutch and a synchronizer of conventional transmissions, and completes the gear shifting process through regulation of a drive motor. Gear shifting of an AMT often has problems such as a low success rate and poor smoothness of gear shifting. For battery electric vehicles with large mass, under operating conditions such as downhill acceleration, uphill deceleration, and braking deceleration, a reverse drag power system of a vehicle generates relatively large drag torque. The reverse drag power system of the vehicle drives the drive motor to accelerate or decelerate rotation, causing an internal transmission mechanism of the AMT to bear relatively great inertial torque caused by the drag torque. This easily results in the inability to disengage the gear, and leads to a shift failure and poor smoothness of the gear shifting. In addition, when an existing electric vehicle shifts a gear on a road surface with a relatively steep slope, the gear shifting process is relatively long, resulting in a relatively long power interruption time, therefore is liable to cause danger.

### SUMMARY

The present invention is intended to provide a pure electric multi-gear AMT gear-shifting control method, a drivetrain, and an electric vehicle, so as to resolve technical problems in the prior art that during gear shifting, it is difficult to achieve gear disengagement as a result of an internal transmission mechanism of an AMT bearing inertial torque caused by drag torque, resulting in poor smoothness of gear shifting.

To resolve the foregoing technical problem, the present invention provides a pure electric multi-gear AMT gear-shifting control method, including:

performing torque reduction on a drive motor to interrupt vehicle power when a vehicle needs to shift a gear;
controlling the drive motor to output a first target torque after the vehicle power is interrupted, where a numerical value of the first target torque is equal to a product of a rotational inertia of a motor rotor and an angular acceleration of the drive motor; and
performing a gear disengagement operation and then performing gear engagement after the drive motor outputs the first target torque.

The beneficial effect thereof is as follows. At an early stage of gear disengagement phase, the torque of the drive motor has already been zeroed. If the vehicle is under operating conditions such as downhill acceleration, uphill deceleration, or braking deceleration at this time, a reverse drag power system of the vehicle causes the drive motor to accelerate or decelerate, and the internal transmission mechanism of the AMT bears the inertial torque caused by the drag torque, which easily leads to a fault of inability to disengage the gear. When the torque outputted by the drive motor is 0, the inertial torque at a drive end of the AMT is equal to a product of a change rate of an angular velocity of rotation of the motor and the rotational inertia of the power system at the drive end. According to the method of the present invention, the drive motor is controlled to output the first target torque of the same magnitude as an inertial torque of a drive end, to overcome the inertial torque, thereby ensuring that the interior of the AMT does not bear drag torque, which improves a success rate and smoothness of gear disengagement of the vehicle.

Preferably, if a tooth profile of clutch teeth is a small-angle sharp tooth, after the gear disengagement, a rotational speed of the drive motor is regulated to a gear speed, and a calculation expression of the gear speed $N_{tgt}$ is: $N_{tgt}=N_{out}*Ratio+\triangle N_{out}*Ratio$, where $N_{out}$ is an actual rotational speed of an output shaft during a speed regulation phase, $\triangle N_{out}$ is a variation in the rotational speed of the output shaft during engagement of the clutch teeth that is calculated based on a vehicle driving state, Ratio is a gear ratio of a target gear, and after the drive motor is regulated to the gear speed, the gear engagement is performed.

The beneficial effect thereof is as follows. The purpose of speed regulation during the speed regulation phase is to ensure that the rotational speed of the drive motor matches the gear speed. Between the completion of speed regulation and the engagement of the clutch teeth during gear engagement, there is a period of time for a gear shifting mechanism to move, during which the rotational speed of the output shaft changes. During calculation of the gear speed through the method of the present invention, the variation in the rotational speed of the output shaft during the engagement of the clutch teeth is taken into account, which ensures that the rotational speed of the drive motor matches the rotational speed of the output shaft at the moment of gear engagement, thereby further increasing the success rate of gear shifting.

Preferably, if the clutch teeth are flat teeth, the rotational speed of the drive motor is regulated after the gear disengagement, so that a certain difference exists between the rotational speed and the gear speed $N_{tgt}$, the gear engagement is performed upon completion of the regulation, the difference is less than 20 r/s, and the calculation expression of the gear speed $N_{tgt}$ is: $N_{tgt}=N_{out}*Ratio+\triangle N_{out}*Ratio$, where $N_{out}$ is an actual rotational speed of an output shaft during a speed regulation phase, $\triangle N_{out}$ is a variation in the rotational speed of the output shaft during engagement of the clutch teeth that is calculated based on a vehicle driving state, Ratio is a gear ratio of a target gear, and the gear engagement is performed upon completion of the regulation of the rotational speed of the drive motor.

The beneficial effect thereof is as follows. A driving end of the clutch teeth is connected to the output shaft of the transmission, and a driven end is connected to the drive motor. During the gear engagement phase of the gear shifting process, it may be difficult for clutch teeth to engage with each other because of tooth butting between both ends of the clutch teeth. By creating a deviation between the rotational speed of the drive motor and the gear speed, the rotational speed of the driving end of the clutch teeth is made mismatched with the rotational speed of the driven end. This ensures that the two ends of the clutch teeth can engage with each other, thereby further increasing the success rate of gear shifting.

Preferably, if the clutch teeth are arc teeth or large-angle sharp teeth, the rotational speed of the drive motor is periodically regulated with the gear speed as a reference within a preset time period after the gear disengagement, so that a difference between the rotational speed of the drive motor and the gear speed alternates periodically between a positive value and a negative value, the gear engagement operation is performed upon completion of the periodic regulation of the rotational speed of the drive motor, an absolute value of the difference is less than 20 r/s, and the calculation expression of the gear speed $N_{tgt}$ is: $N_{tgt}=N_{out}*Ratio+\triangle N_{out}*Ratio$, where $N_{out}$ is an actual rotational speed of an output shaft during a speed regulation phase, $\triangle N_{out}$ is a variation in the rotational speed of the output shaft during engagement of the clutch teeth that is calculated based on a vehicle driving state, Ratio is a gear ratio of a target gear, and the gear engagement is performed upon completion of the regulation of the rotational speed of the drive motor.

The beneficial effect thereof is as follows. The driving end of the clutch teeth is connected to the output shaft of the transmission, and the driven end is connected to the drive motor. During the gear engagement phase of the gear shifting process, it is very likely that tooth butting will occur between a driving gear and a driven gear of the clutch teeth and the driving gear and the driven gear are difficult to engage with each other. Through periodic alternation of the difference between the rotational speed of the drive motor and the gear speed between a positive value and a negative value, a situation of jamming and a failure to engage as a result of mutual blocking of tooth tips between large-angle sharp teeth or arc teeth occurs under a unidirectional speed difference can be avoided. A reverse speed difference allows the tooth tips of the clutch teeth to avoid each other, which ensures that the driving gear and the driven gear of the clutch teeth can smoothly engage with each other, thereby further increasing the success rate of gear shifting.

Preferably, when the vehicle driving state changes, gear shifting of the AMT is delayed, and a delay time is less than a first threshold.

The beneficial effect thereof is as follows. A relatively large transmission backlash exists between the AMT plus a rear-row transmission mechanism and a wheel end of the vehicle. When a driving intention changes, that is, when the vehicle driving state changes, such as switching from driving to braking, a transmission mechanism is to shift from driving torque to braking torque. In this process, if a rotational inertia of a driveline undergoes a sudden change, torsional vibration in the driveline is easily caused, resulting in abnormal noise. In addition, an output shaft speed signal is distorted, leading to deterioration in smoothness and the success rate of the gear shifting. Therefore, when the driving intention of a driver changes, delaying the gear shifting of the AMT can prevent sudden changes in the rotational inertia of the driveline, thereby avoiding torsional vibration in the driveline and further improving the smoothness and the success rate of gear shifting.

Preferably, a larger throttle opening (accelerator pedal position) and/or a steeper slope of a road surface on which the vehicle is located indicates a higher torque change rate of the drive motor during the torque reduction.

The beneficial effect thereof is as follows. In the gear shifting process, the vehicle is to experience temporary power interruption. In a case where the throttle opening is large or the road slope is steep, the driver has a high requirement for power. A higher torque change rate of the drive motor may allow the torque reduction process to be completed as soon as possible, thereby shortening the duration of the entire gear shifting process, which results in higher gear shifting efficiency, ensures output of the vehicle, and may avoid dangers caused by prolonged power interruption when the vehicle is on a slope.

Preferably, after the gear engagement, torque restoration is performed on the drive motor, and a steeper slope of a road surface on which the vehicle is located and/or a larger throttle opening indicates a higher torque change rate of the drive motor during the torque restoration.

The beneficial effect thereof is as follows. In the gear shifting process, the vehicle is to experience temporary power interruption. In a case where the slope is steep or the road slope is steep, it indicates that the driver has a high requirement for power, causing the drive motor to rapidly restore torque, thereby further shortening the duration of the entire gear shifting process, and avoiding dangers caused by prolonged power interruption when the vehicle is on a slope.

To resolve the foregoing technical problem, the present invention further provides a drivetrain, including a drive motor and a multi-gear AMT that are drive-connected, where the drivetrain controls, through the pure electric multi-gear AMT gear-shifting control method of the present invention, operation of the drive motor and the multi-gear AMT to perform gear shifting.

The beneficial effect thereof is as follows. At an early stage of the gear disengagement phase, the torque of the drive motor has already been zeroed. If the vehicle is under operating conditions such as downhill acceleration, uphill deceleration, or braking deceleration at this time, a reverse drag power system of the vehicle causes the drive motor to accelerate or decelerate, and the internal transmission mechanism of the AMT bears the inertial torque caused by the drag torque, which easily leads to a fault of inability to disengage the gear. When the torque outputted by the drive motor is 0, the inertial torque of a drive end of the AMT is equal to a product of a change rate of an angular velocity of rotation of the motor and the rotational inertia of the power system at the drive end. The drive motor is controlled to output the first target torque of the same magnitude as an inertial torque of a drive end, to overcome the inertial torque, thereby ensuring that the interior of the AMT does not bear drag torque, improving the success rate of gear disengagement, and thus greatly improving the success rate and smoothness of gear shifting of the vehicle through the drivetrain of the present invention.

To resolve the foregoing technical problem, the present invention further provides an electric vehicle. The electric vehicle includes the drivetrain of the present invention.

The beneficial effect thereof is as follows. At an early stage of the gear disengagement phase, the torque of the drive motor has already been zeroed. If the vehicle is under operating conditions such as downhill acceleration, uphill deceleration, or braking deceleration at this time, a reverse drag power system of the vehicle causes the drive motor to accelerate or decelerate, and the internal transmission mechanism of the AMT bears the inertial torque caused by the drag torque, which easily leads to a fault of inability to disengage the gear. When the torque outputted by the drive motor is 0, the inertial torque of a drive end of the AMT is equal to a product of a change rate of an angular velocity of rotation of the motor and the rotational inertia of the power system at the drive end. According to the electric vehicle of the present invention, the drive motor is controlled to output the first target torque of the same magnitude as an inertial torque of a drive end, to overcome the inertial torque, thereby ensuring that the interior of the AMT does not bear drag torque, improving the success rate of gear disengagement. Through the electric vehicle of the present invention, the success rate and smoothness of gear shifting of the vehicle may be greatly improved, thereby providing a better driving experience for the driver.

## BRIEF DESCRIPTION OF THE DRAWINGS

FIG. 1 is a flowchart of steps of a method of the present invention.
FIG. 2 is a schematic diagram of a gear shifting process of an AMT according to the present invention.
FIG. 3 is a schematic diagram of a tooth-shaped structure of clutch teeth.

## DETAILED DESCRIPTION

To make the purpose, technical solutions, and advantages of the present invention clearer, the present invention is further described in detail below with reference to the accompanying drawings and embodiments.

**Embodiment of a pure electric multi-gear AMT gear-shifting control method:**

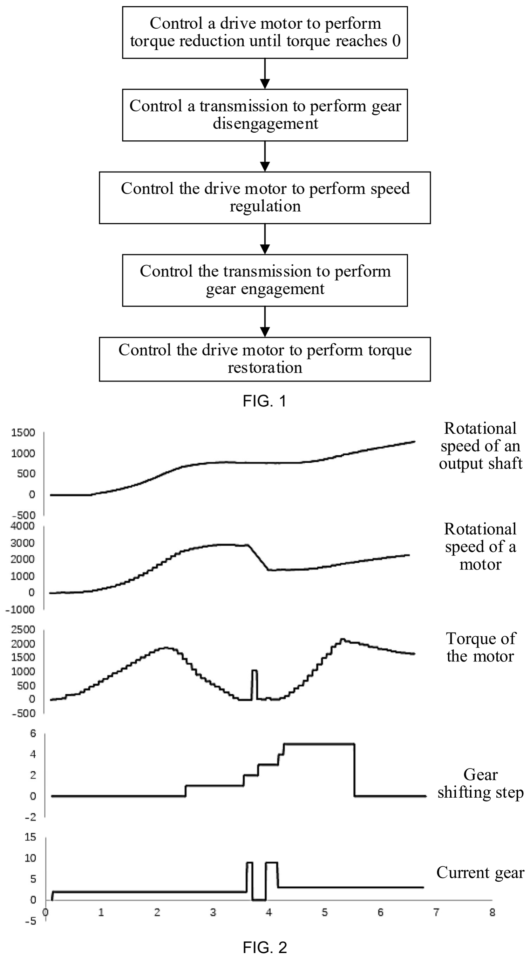

As shown in FIG. 1 and FIG. 2, the pure electric multi-gear AMT gear-shifting control method of the present invention includes the following steps.

Step 1: Control a drive motor to reduce a torque to zero.

A torque reduction speed of the drive motor is dynamically regulated based on a throttle opening and a slope on which a vehicle is located. Specifically, when a driver applies a large throttle opening, it indicates that the driver has a high requirement for power. Therefore, when the driver is driving with a large throttle, a torque reduction process of a transmission should be completed as soon as possible. To be specific, a larger throttle opening indicates a higher torque change rate of the drive motor in the torque reduction process, thereby shortening the time in the overall gear shifting process, achieving higher gear shifting efficiency, and ensuring power of the vehicle. A power interruption is unavoidable during the gear shifting of a transmission. Therefore, during driving on a slope, the torque reduction process should be completed as soon as possible. To be specific, a steeper road slope indicates a higher torque change rate of the drive motor during the torque reduction. This shortens the overall gear shifting time, thereby avoiding potential dangers to the vehicle on the slope caused by prolonged power interruption.

A sum of the transmission backlash between all mutually mated gears in an AMT is relatively large. When a driving intention changes, that is, when the vehicle driving state changes, such as switching from driving to braking, a transmission mechanism is to shift from forward dragging to reverse dragging. In this process, if a rotational inertia of a driveline undergoes a sudden change, torsional vibration in the driveline is easily caused, resulting in abnormal noise. In addition, an output shaft speed signal is distorted, leading to deterioration in smoothness and a success rate of gear shifting. Therefore, when the driving intention of the driver changes, gear shifting of the AMT is delayed, that is, delaying the zeroing of torque outputted by the drive motor. A delay time is less than a first threshold. A larger throttle opening of the vehicle indicates a shorter delay time, and a steeper road surface slope indicates a shorter delay time.

Step 2: Control a transmission to perform gear disengagement.

The drive motor is controlled to output a first target torque before the gear disengagement. A magnitude of the first target torque is determined based on an angular acceleration of the drive motor, and a calculation expression thereof is:

$$Tq = J*\alpha \qquad (1)$$

In the expression, Tq is the first target torque, J is the rotational inertia of an input end of the transmission and the motor rotor, and $\alpha$ is the angular acceleration of the drive motor.

At an early stage of gear disengagement phase, the torque of the drive motor has already been zeroed. If the vehicle is under operating conditions such as downhill acceleration, uphill deceleration, or braking deceleration at this time, a reverse drag power system of the vehicle causes the drive motor to accelerate or decelerate, and an internal transmission mechanism of the AMT bears the inertial torque caused by the drag torque, which easily leads to a fault of inability to disengage the gear. Therefore, during the gear disengagement phase, it is necessary to take into account the rate of change of the rotational angular velocity of the motor, calculate the inertial torque at the drive end in combination with the rotational inertia of the power system at the drive end, and request the drive motor to output torque to overcome the inertial torque. This ensures that the interior of the AMT does not bear drag torque, thereby improving the success rate of gear disengagement.

Step 3: Control the drive motor to perform speed regulation.

The setting of a target rotational speed of the drive motor is calculated and corrected based on the tooth profile of clutch teeth of the transmission and an acceleration/deceleration status of the vehicle during driving. If the tooth profile of the clutch teeth is small-angle sharp teeth, the clutch teeth can complete engagement as long as the gear shifting force is sufficiently large. Therefore, the rotational speed that the drive motor needs to output needs to be exactly consistent with the gear speed, and the calculation expression for the gear speed is as follows:

$$N_{tgt}=N_{out}*Ratio+\triangle N_{out}*Ratio \qquad (2)$$

where $N_{tgt}$ is the gear speed, $N_{out}$ is an actual rotational speed of an output shaft in the speed regulation phase, $\triangle N_{out}$ is a variation in the rotational speed of the output shaft during engagement of the clutch teeth calculated based on the vehicle driving state, and the Ratio is a gear ratio of the target gear.

The purpose of speed regulation during the speed regulation phase is to ensure that the rotational speed of the drive motor matches the gear speed. There is a period for the gear shifting mechanism to move from the completion of speed regulation to the engagement of the clutch teeth during gear engagement. Therefore, the setting of a theoretical target speed of the drive motor in the speed regulation phase should take into account the acceleration/deceleration status of the vehicle in neutral gear, and predict the rotational speed of the output shaft during engagement of the clutch teeth. The predicted numerical value is used as the target rotational speed of the drive motor during the speed regulation phase, which can ensure that the rotational speed of the drive motor matches the gear speed at the moment of gear engagement.

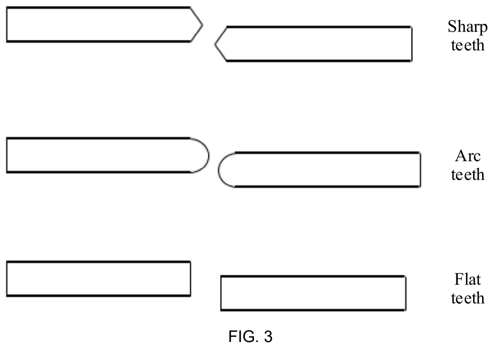

As shown in FIG. 3, except for the small-angle sharp tooth profile, other tooth profiles of the clutch teeth are likely to have a tooth-on-tooth interference between the driving teeth and driven teeth of the clutch teeth during the gear engagement phase. The actual output rotational speed of the drive motor should be set based on the tooth profile of the clutch teeth, and the drive motor torque should be limited to a relatively small numerical value to avoid gear engagement impact. If the clutch teeth are flat teeth, the rotational speed of the drive motor is regulated after the gear disengagement, so that a certain difference exists between the rotational speed and the gear speed $N_{tgt}$, the gear engagement is performed upon completion of the regulation, and the difference is less than 20 r/s.

During the gear engagement phase of the gear shifting process, a situation where two ends of the clutch teeth fail to engage with each other may occur. By enabling asynchronous rotation of the two ends of the clutch teeth, it is ensured that the two ends of the clutch teeth can engage with each other, thereby further improving the success rate of gear shifting.

If the clutch teeth are arc teeth or large-angle sharp teeth, the rotational speed of the drive motor is periodically regulated with the gear speed as a reference within a preset time period after the gear disengagement, so that a difference between the rotational speed of the drive motor and the gear speed alternates periodically between a positive value and a negative value, and the gear engagement operation is performed upon completion of the periodic regulation of the rotational speed of the drive motor. The difference between the rotational speed of the drive motor and the gear speed alternates periodically between the positive value and the negative value, so that the driving end and the driven end of the clutch teeth are periodically switched between relative forward rotation and relative reverse rotation. The relative forward rotation means that a linear velocity of gear teeth at the driving end of the clutch teeth is greater than a linear velocity of gear teeth at the driven end, or the linear velocity of the gear teeth at the driving end is less than the linear velocity of the gear teeth at the driven end. If the relative forward rotation means that the linear velocity of the gear teeth at the driving end of the clutch teeth is greater than the linear velocity of the gear teeth at the driven end, the relative reverse rotation means that the linear velocity of the gear teeth at the driving end is less than the linear velocity of the gear teeth at the driven end. If the relative forward rotation means that the linear velocity of the gear teeth at the driving end is less than the linear velocity of the gear teeth at the driven end, the relative reverse rotation means that the linear velocity of the gear teeth at the driving end is greater than the linear velocity of the gear teeth at the driven end. The difference is less than 20 r/s. Through adjustment of the target rotational speed, it is ensured that the two ends of the clutch teeth have periodic switching between relative forward rotation and relative reverse rotation after gear engagement, thereby ensuring that a driving gear and a driven gear of the clutch teeth can engage with each other.

Step 4: Control the transmission to perform gear engagement.

After the speed regulation of the drive motor is completed, the transmission may be controlled to perform the gear engagement.

Step 5: Control the drive motor to perform torque restoration.

Upon completion of the gear engagement, the drive motor is controlled to output a second target torque. A magnitude of the second target torque of the drive motor is determined based on a throttle pedal opening and a slope on which the vehicle is located. During the torque restoration, a change rate of the torque of the drive motor is dynamically regulated based on the throttle opening and the magnitude of the slope of a road surface on which the vehicle is located. A steeper slope indicates a higher torque change rate of the drive motor during the torque restoration, thereby avoiding potential dangers to the vehicle on the slope caused by prolonged power interruption. A larger throttle opening indicates a higher torque change rate of the drive motor during the torque restoration, thereby further shortening the time in the overall gear shifting process, achieving higher gear shifting efficiency, and ensuring power of the vehicle.

**Embodiment of a drivetrain:**

The drivetrain of the present invention includes a drive motor and a multi-gear AMT that are drive-connected, where the drivetrain controls, through the pure electric multi-gear AMT gear-shifting control method of the present invention, operation of the drive motor and the multi-gear AMT to perform gear shifting. Through the drivetrain of the present invention, a gear shifting success rate and smoothness of a vehicle can be greatly improved. The technical effects and the specific process of the pure electric multi-gear AMT gear-shifting control method of the present invention have been described in detail in the pure electric multi-gear AMT gear-shifting control method. Details are not described herein again.

**Embodiment of an electric vehicle:**

The electric vehicle of the present invention includes the drivetrain and a vehicle body of the present invention. The technical effects of the drivetrain of the present invention and the specific process of the pure electric multi-gear AMT gear-shifting control method used in the drivetrain have been described in detail in the pure electric multi-gear AMT gear-shifting control method. Details are not described herein again.

**Claims**

1. A pure electric multi-gear AMT gear-shifting control method, comprising:

   performing torque reduction on a drive motor to interrupt vehicle power when a vehicle needs to shift a gear;
   controlling the drive motor to output a first target torque after the vehicle power is interrupted, where a numerical value of the first target torque is equal to a product of a rotational inertia of a motor rotor and an angular acceleration of the drive motor; and
   performing a gear disengagement operation and then performing gear engagement after the drive motor outputs the first target torque.

2. The pure electric multi-gear AMT gear-shifting control method according to claim 1, wherein if a tooth profile of clutch teeth is a small-angle sharp tooth, after the gear disengagement, a rotational speed of the drive motor is regulated to a gear speed, and a calculation expression of the gear speed $N_{tgt}$ is: $N_{tgt}=N_{out}*Ratio+\triangle N_{out}*Ratio$, wherein $N_{out}$ is an actual rotational speed of an output shaft during a speed regulation phase, $\triangle N_{out}$ is a variation in the rotational speed of the output shaft during engagement of the clutch teeth that is calculated based on a vehicle driving state, Ratio is a gear ratio of a target gear, and after the drive motor is regulated to the gear speed, the gear engagement is performed.

3. The pure electric multi-gear AMT gear-shifting control method according to claim 1, wherein if the clutch teeth are flat teeth, a rotational speed of the drive motor is regulated after the gear disengagement, so that a certain difference exists between the rotational speed and a gear speed $N_{tgt}$, the gear engagement is performed upon completion of the regulation, the difference is less than 20 r/s, and a calculation expression of the gear speed $N_{tgt}$ is: $N_{tgt}=N_{out}*Ratio+\triangle N_{out}*Ratio$, wherein $N_{out}$ is an actual rotational speed of an output shaft during a speed regulation phase, $\triangle N_{out}$ is a variation in the rotational speed of the output shaft during engagement of the clutch teeth that is calculated based on a vehicle driving state, Ratio is a gear ratio of a target gear, and the gear engagement is performed upon completion of the regulation of the rotational speed of the drive motor.

4. The pure electric multi-gear AMT gear-shifting control method according to claim 1, wherein if the clutch teeth are arc teeth or large-angle sharp teeth, a rotational speed of the drive motor is periodically regulated with a gear speed as a reference within a preset time period after the gear disengagement, so that a difference between the rotational speed of the drive motor and the gear speed alternates periodically between a positive value and a negative value, the gear engagement operation is performed upon completion of the periodic regulation of the rotational speed of the drive motor, an absolute value of the difference is less than 20 r/s, and a calculation expression of the gear speed $N_{tgt}$ is: $N_{tgt}=N_{out}*Ratio+\triangle N_{out}*Ratio$, wherein $N_{out}$ is an actual rotational speed of an output shaft during a speed regulation phase, $\triangle N_{out}$ is a variation in the rotational speed of the output shaft during engagement of the clutch teeth that is calculated based on a vehicle driving state, Ratio is a gear ratio of a target gear, and the gear engagement is performed upon completion of the regulation of the rotational speed of the drive motor.

5. The pure electric multi-gear AMT gear-shifting control method according to claim 1, wherein when vehicle driving state changes, gear shifting of an AMT is delayed, and a delay time is less than a first threshold.

6. The pure electric multi-gear AMT gear-shifting control method according to any one of claims 1 to 5, wherein a larger throttle opening and/or a steeper slope of a road surface on which the vehicle is located indicates a higher torque change rate of the drive motor during the torque reduction.

7. The pure electric multi-gear AMT gear-shifting control method according to any one of claims 1 to 5, wherein after the gear engagement, torque restoration is performed on the drive motor, and a steeper slope of a road surface on which the vehicle is located and/or a larger throttle opening indicates a higher torque change rate of the drive motor during the torque restoration.

8. A drivetrain, comprising a drive motor and a multi-gear AMT that are drive-connected, wherein the drivetrain controls operation of the drive motor and the multi-gear AMT to perform gear shifting through the pure electric multi-gear AMT gear-shifting control method according to any one of claims 1 to 7.

9. An electric vehicle, comprising the drivetrain according to claim 8.

FIG. 1

FIG. 2

Sharp
teeth

Arc
teeth

Flat
teeth

FIG. 3

## INTERNATIONAL SEARCH REPORT

| International application No. |
| --- |
| **PCT/CN2024/075880** |

| A. | CLASSIFICATION OF SUBJECT MATTER |
| --- | --- |

F16H61/04(2006.01)i; F16H61/02(2006.01)i; F16H61/12(2010.01)i

According to International Patent Classification (IPC) or to both national classification and IPC

| B. | FIELDS SEARCHED |
| --- | --- |

Minimum documentation searched (classification system followed by classification symbols)

IPC: F16H61, H02K7

Documentation searched other than minimum documentation to the extent that such documents are included in the fields searched

Electronic data base consulted during the international search (name of data base and, where practicable, search terms used)

CNTXT, ENTXTC, DWPI, CNKI: 电动, 换挡, 换档, 清扭, 摘挡, 摘档, 挂档, 挂挡, 尖齿, 平齿, 弧齿, 齿形, 齿型, electric+, vehicle, shift+, torque, AMT, gear+, transmis+,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110901644 A (DONGFENG COMMERCIAL VEHICLE CO., LTD.) 24 March 2020 (2020-03-24) <br> claims 1 and 8, description, paragraphs 16-24, and figure 1 | 1, 5-9 |
| PX | CN 116906562 A (YUTONG BUS CO., LTD.) 20 October 2023 (2023-10-20) <br> claims 1-9 | 1-9 |
| A | CN 110332307 A (HANTENG AUTOMOBILE CO., LTD.) 15 October 2019 (2019-10-15) <br> entire document | 1-9 |
| A | CN 113864446 A (ANHUI JIANGHUAI AUTOMOBILE GROUP CO., LTD.) 31 December 2021 (2021-12-31) <br> entire document | 1-9 |
| A | CN 114165584 A (WEICHAI POWER CO., LTD. et al.) 11 March 2022 (2022-03-11) <br> entire document | 1-9 |
| A | CN 114483945 A (FAW JIEFANG AUTOMOTIVE CO., LTD.) 13 May 2022 (2022-05-13) <br> entire document | 1-9 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 April 2024** | **09 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/075880** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 115264051 A (SUOTE TRANSMISSION EQUIPMENT CO., LTD.) 01 November 2022 (2022-11-01)<br>    entire document | 1-9 |
| A | DE 102008032768 A1 (VOLKSWAGEN AG et al.) 14 January 2010 (2010-01-14)<br>    entire document | 1-9 |

Form PCT/ISA/210 (second sheet) (July 2022)

**INTERNATIONAL SEARCH REPORT**
Information on patent family members

International application No.

**PCT/CN2024/075880**

| Patent document cited in search report | | | Publication date (day/month/year) | Patent family member(s) | Publication date (day/month/year) |
|---|---|---|---|---|---|
| CN | 110901644 | A | 24 March 2020 | None | |
| CN | 116906562 | A | 20 October 2023 | None | |
| CN | 110332307 | A | 15 October 2019 | None | |
| CN | 113864446 | A | 31 December 2021 | None | |
| CN | 114165584 | A | 11 March 2022 | None | |
| CN | 114483945 | A | 13 May 2022 | None | |
| CN | 115264051 | A | 01 November 2022 | None | |
| DE | 102008032768 | A1 | 14 January 2010 | None | |

Form PCT/ISA/210 (patent family annex) (July 2022)